# EUROPEAN PATENT SPECIFICATION

(11) **EP 2 865 935 B1**
(45) Date of publication and mention of the grant of the patent: **25.11.2020**
(21) Application number: 14187642.5
(22) Date of filing: 03.10.2014
(51) Int. Cl.: F16P 3/14

(54) **System for controlling a technical working area**
System zum Steuern eines technischen Arbeitsbereichs
Système permettant de contrôler une zone de travail technique

(30) Priority: 04.10.2013 FI 20135996
(43) Date of publication of application: 29.04.2015
(73) Proprietor: Selamatic OY, 50160 Mikkeli (FI)
(72) Inventor: Matilainen, Marko, 50170 MIKKELI (FI)
(74) Representative: Berggren Oy, Helsinki & Oulu

(56) References cited:
- WO-A1-2009/020765
- WO-A2-2011/123741
- US-A1- 2010 271 208

## Description

### Technical field

The application relates generally to a system for controlling a technical working area.

### Background

Technical working areas in schools and other educational institutes comprise metal working and woodworking machines, which are used in an educational use.

In order to control the metal and woodworking machines, it has been designed the VeiStop control system for improving a security in a technical area by preventing an illegal use of the working machines and accidents because of such use.

The system comprises a main operation portion and one local operation portion for each working machine, which are used for activating the working machines, i.e. for allowing a use of the working machines, by means of wireless electronic keys. The operation portions read the keys and, if a key is valid, the system allows the use of the working machine.The main operation portion, which controls the use of all working machines portion, locates usually e.g. in a teacher's room and each local operation portion in a vicinity of its working machine or it is integrated in the working machine. It is impossible to start a working machine without activations in the main and local operation portions. Firstly, a general activation must be carried out by the main operation unit and, only after that, it is possible to activate the working machine, which is meant to be started, by the valid key read by the local operation portion.

However, one problem of the system is a troublesome updating of a control software, a management of the working machines, i.e. an addition of new working machine and a removal of an old working machine, and a management of the keys, i.e. an addition of new keys, and a use limitation or deletion of keys, because these operations are a technical area specific (system specific) and those has to be carried out locally, which means increasing costs.

In addition, another problem is that a teacher does not know which working machines are activated or which are currently in use when the teacher is outside the teacher's room so that he/she cannot see the main operation portion indicating a state of the working machines, whereupon the teacher is unaware of the security in the technical working area.

The preceding drawbacks have limited significantly the usability of the VeiStop system.

PCT publication WO 2009/020765 discloses a protective gear for persons working in and around hazardous locations, and monitoring system for ensuring appropriate use of such gear.

### Summary

Therefore, one object of the invention is to withdraw the above-mentioned drawbacks and provide a simple, advantageous, and secure control system for a technical working area.

One object of the invention is fulfilled by independent system and method claims.

One embodiment comprises a system for controlling a technical working area comprising at least one metal working and/or woodworking machine. The system comprising a central processing unit configured to control the at least one metal working and/or woodworking machine remotely and the at least one metal working and/or woodworking machine comprising a local operation portion, which is configured to activate and/or deactivate the at least one metal working and/or woodworking machine after identifying a user. The system also comprising at least one portable user identifier configured to identify the user when it is read by the local operation portion.The system further comprising at least one server configured to communicate with the central processing unit through a telecommunication connection and the central processing unit further configured to arrange information to the at least one server for controlling a use of the at least one metal working and/or woodworking machine, and/or a use of the at least one user identifier.

The term "technical working area" refers to e.g. a shop in a school or other educational institute, e.g. a elementary school, secondary school, upper secondary school, vocational school, technical college, or vocational high school, where it is possible to study and/or to practice shop, or a technical working area in a factory or handicraft workshop.

The term "metal working and/or woodworking machine" refers to a machine, which is configured to process wood and possibly metal and/or plastic. Such machine can be e.g. a column-type drilling machine, turning machine (lathe), band saw, circular saw, rotary planer, or emery.

The term "telecommunication connection" refers to a wired and/or wireless telecommunication connection, e.g. a computer network connection, mobile network connection, or an Internet connection provided by means of a public switched telephone network and/or a mobile telephone network.

One embodiment comprises a method for controlling a technical working area comprising at least one metal working and/or woodworking machine. The method comprising controlling by a central processing unit the at least one metal working and/or woodworking machine remotely and the at least one metal working and/or woodworking machine comprising a local operation portion. The method also comprising identifying by the local operation portion a user when at least one portable user identifier is read, and activating and/or deactivating by the the local operation portion the at least one metal working and/or woodworking machine after identifying the user. The method further comprising communicating by at least one server with the central processing unit through a telecommunication connection and arranging by the central processing unit information to the at least one server for controlling a use of the at least one metal working and/or woodworking machine, and/or a use of the at least one user identifier.

Further embodiments are defined in dependent claims.

The verb "to comprise" is used in this document as an open limitation that neither excludes nor requires the existence of also unrecited features. The verbs "to include" and "to have/has" are defined as to comprise.

The terms "a", "an" and "at least one", as used herein, are defined as one or more than one, and the term "plurality" is defined as two or more than two. The term "another", as used herein, is defined as at least a second or more.

The term "or" is generally employed in its sense comprising "and/or" unless the content clearly dictates otherwise.

For the above-mentioned defined verbs and terms, these definitions shall be applied, unless a different definition is given in the claims or elsewhere in this description/specification.

Finally, the features recited in depending claims are mutually freely combinable unless otherwise explicitly stated.

### Brief description of the figure

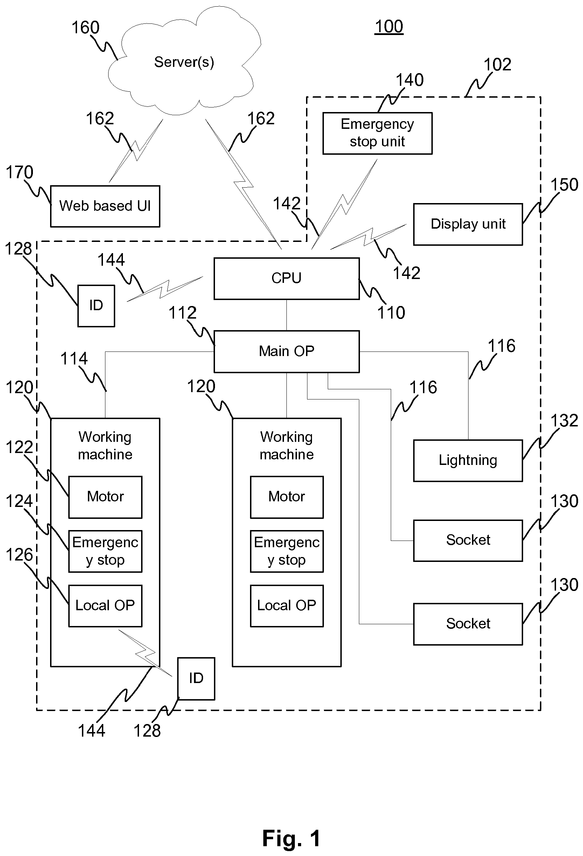

The exemplary embodiments of the invention will be described with reference to the accompanying figure, in which
- figure 1: illustrates an exemplary view of a system for controlling a technical area.

### Detailed description of the figure

Figure 1 illustrates a system 100 for controlling a technical working area 102 comprising at least one metal working and/or woodworking machine 120, and at least one socket 130 and/or at least one lightning unit 132.

The system 100 comprising a central processing unit 110, which controls the metal working and/or woodworking machines 120, sockets 130, and lightning unit 132 remotely through a wired (cable) or wireless connections 114, 116 by means of a main operation portion 112. The CPU 110 is connected through a wired or wirelless connection to the main OP 112, which can be placed e.g. in a wall of the technical working area 102, e.g. in a teacher's room or any other location, where it is under a teacher's control.

The CPU 110 comprise at least a processor unit, a memory unit, a data transfer unit for receiving and transmitting information, and a user interface for inputting and/or displaying data, e.g. a keyboard and a display

One embodiment of the invention comprises a method, where the technical working area 102 comprising at least one socket 130 and/or at least one lightning unit 132, and the CPU 110 controls the at least one socket 130 and/or lightning unit 132.

The main OP 112 serves as an user interface of the CPU 110 for controlling the devices 120, 130, 132, and it may comprise at least one of the followings: a processor unit, a memory unit, a data transfer unit for receiving and transmitting information through a wired or wireless interface 114, 116, a user interface, e.g. a keypad and a display, for inputting and/or displaying data, and for indicating an activated, deactivated, and operating devices 120, 130, 132, and a reader unit, e.g. a radio frequency identification reader or a Wiegand reader, for reading remotely or in contact portable user identifiers (electronic keys) 128 for identifying a person (user) who tries to activate or deactivate the device 120, 130, 132, and, thus, for enabling the activation, use of the devices 120, 130, 132 after a succesful identification, and deactivation.

The main OP 112, which is fitted in a teacher's room, in a vicinity of it, or some other suitable location in the technical area 102, or it can be portable, is configured to control up to 100 devices 120, 130, 132 or group of devices 120, 130, 132 because of its processor unit, or a locig. In addition, the main OP 112 can manage up to 100 identifiers 128.

Each metal working and/or woodworking machine120 in the technical working area 102 comprising its control unit, a data transfer unit for receiving and transmitting information, an on/off button for turning on and off the working machine 120, its motor(s) 122, an emergency stop unit 124, which stops the working machine 120 when it is pressed, and a local operation portion 126, which is configured to activate and/or deactivate the woodworking machine 120 after identifying a user by e.g. a (short-range) RF connection 144.

The system 100 comprises at least one portable user identifier 128, as it has been mentioned. The identifiers 128, e.g. RFID tags or Wiegand keys, is used for identifying a user when it is read by the local OP 126. The identification can be carried out wirelessly by establishing the RF connection 144 between the RFID tag 128 and the reader unit of the local OP 126, or by putting the Wiegand key 128 in contact with the reader unit. If the local OP 126 recognizez that the user, i.e. the identifier 128, has right to use the working machine 120 or other device 130, 132, it activates the working machine 120 so that the user can turn it on. When the user has turn the working machine 120 off and the local OP 126 reads the same identifier 128 later on, it deactivates the working machine 120 for preventing the illegal use after the identified user has left from the vicinity of the working machine 120 or the other device 130, 132.

The system 100 further comprising at least one remote server 160, which communicates with the CPU 110 through a telecommunication connection 162. The CPU 110 arranges information to the server 160 for controlling and tracing the use of the working machines 120 and other devices 130, 132, and/or the use of the identifiers 128. Naturally, the server 160 arranges information to the CPU 100 when necessary.

The CPU 110 can update its control software by means of update information, which the server 160 has sent through the connection 162 by request. Alternatively, it is possible to update the control software from the server 160, whereupon it is possible update a plurality of the systems 100 (CPUs 110) at the same time, which is a cost efficiency.

The CPU 110 also manages a log(s) of the working machines 120 so that it is possible afterwards to solve who has used a certain working machine 120 at a certain time, when a certain working machine 120 has been active, or its motor 122 has been turned on. The CPU 110 can also collect other relevant information, which can be used later on, e.g. power consumption and/or (total) operating time information of a certain working machine 120.

In addition, the CPU 110 monitors a need for a service for each working machine 120 and, when it is topical, its inform the server 160 about the need for a service. The CPU 110 also manages rights of the identifiers 128.

One embodiment of the invention comprises a method, where the CPU 110 provides at least one of followings: updating its control software by means of update information sent by the at least one server 160, managing a log of the at least one working machine 120, obtaining power consumption and/or operating time information of the at least one working machine 120, monitoring a need for a service, informing the at least one server 160 about the need for a service, and managing rights of the at least one identifier 128.

The CPU 110 sends automatically the collected information to the server 160, which maintains records of the system 100 and its devices 120, 130, 132 and which stores the information, but, alternatively, it is possible that the CPU 110 stores the collected information in its own memory and sends the information by a request made by the server 160.

It is easy and effective to update softwares and to manage the working machines 120 and other devices 130, 132, and identifiers 128, e.g. by limiting a use of certain or all working machines 120 on a basis of operation times, through the server 160, but it also saves energy and improves safety when the illegal use has been prevented at evenings, or on a basis of locations and a use of working machines 120, whereupon it is possible to prevent a use of the adjacent working machines 120 for improving the safety.

The server 160 allows an access to it, if a client send a request to see or download information about the working machines 120 or other devices 130, 132, and/or identifiers 128 through a connection 162 by means of a web-based or native user interface 170. Then, the server 160 retrieves the requested information from its database(s) or from the CPU 110 by the request.

One embodiment of the invention comprises a method, where the at least one server 160 allows an access to it through a connection 162 by means of a user interface 170.

The server 160 is configured to represent and/or modify the information from the CPU 110, e.g. log data, power consumption, operating time, a service history and/or service schedule of the working machine 120, or a validity of the identifiers 128, so that it can provide requested information e.g. by sending or displaying it to the client.

One embodiment of the invention comprises a method, where the at least one server 160 represents and/or modifies at least one of following informations: log data, power consumption, operating time, a service history and/or service schedule of the at least one working machine 120, and a validity of the at least one identifier 128.

The system 100 further comprising at least one portable emergency stop unit 140, which can send a stop command for all working machines 120 and stop everyone of them at one time when it is pressed by a user, e.g. the teacher.

It is possible to carry out the emergency stopping of the working machines 120 by inputting DC current to the working machines 120 instead of AC current, whereupon the motors 122 decelerate until the working machines 120 finally stop.

The CPU 110 and/or each working machine 120 can also comprise power supplies, e.g. batteries, in a case of a power failure, whereupon it is still possible to carry out the emergency stopping in a controllable way by pushing the emergency stop unit 124, 140 in order to decelerate the motors 122.

The system 100 further comprising at least one portable display unit 150, e.g. a mobile phone, smart phone or tablet computer, which can represent on its display whether the working machines 120 is activated, in use, or deactivated. The display unit 150 can also display alarm information or other device-related important information, e,g, operation times, service schedules, or service needs. The displayed information is obtained from the the CPU 110 through a wired connection or wireless connection 142, e.g. a Bluetooth connection or a mobile telephone network.

The display unit 150 comprises a processor unit, a memory unit, and a data transfer unit for communicating through the wired connection or wireless connection 142, e.g. the short-range connection, e.g. the Bluetooth or WiFi connection, or the mobile telephone connection. The display unit 150 also comprises a user interface, e.g. a keypad and display, or a touchscreen, for inputting and displaying information.

Each working machine 120 can also be configured to transmit alarm information, e.g. when in the vicinity of a certain working machine 120 exists a dangerous situation and some has pressed the emergency stop button 124, whereupon the data transfer unit of the working machine 120 transmits the alarm information via the CPU 110 by means of e.g. its GSM modem, to display unit 150 that displays the received alarm information, e.g. information about where the dangerous situation is. This way the teacher is aware of the dangerous situation even if he/she is outside the technical working area 102.

One embodiment of the invention comprises a method, where at least one portable display unit 150 represents whether the at least one working machine 120 is activated and/or it is in use, the activation information is obtained from the the CPU 110 through a wireless connection 142.

The invention has been now explained above with reference to the aforesaid exemplary embodiments and the several advantages of the invention have been demonstrated. It is clear that the invention is not only restricted to these embodiments, but comprises all possible embodiments within the spirit and scope of the invention thought and the following claims.

## Claims

1. A system (100) for controlling a use of at least one metal working and/or woodworking machine (120) in a technical working area (102), comprising
a central processing unit (110) configured to control the at least one metal working and/or woodworking machine remotely,
the at least one metal working and/or woodworking machine,
a local operation portion (126) for each metal working and/or woodworking machine (120), and
at least one portable user identifier (128) configured to identify a user when it is read by the local operation portion,
the system further comprising at least one server to which the central processing unit arranges information through a telecommunication connection for managing the use of the at least one metal working and/or woodworking machine, and a use of the at least one user identifier
and **characterised in that**:
the local operation portion is configured to activate the at least one metal working and/or woodworking machine after identifying a user, if it recognizes that the user has right to use the at least one metal working and/or woodworking machine, so that i the user can turn the at least one metal working and/or woodworking machine on after the activation, and
the local operation portion is configured to deactivate the at least one metal working and/or woodworking machine after identifying a user, when the user has turned the at least one metal working and/or woodworking machine off and it recognizes the user, so that the use of the at least one metal working and/or woodworking machine is prevented after the deactivation.

2. The system of the preceding claim, where the central processing unit provides at least one of followings: to update its control software by means of update information sent by the at least one server, to manage a log of the at least one metal working and/or woodworking machine, to obtain power consumption and/or operating time information of the at least one metal working and/or woodworking machine, to monitor a need for a service, to inform the at least one server about the need for a service, and to manage rights of the at least one user identifier.

3. The system of any of preceding claims, where the at least one server represents and/or modifies at least one of following informations: log data, power consumption, operating time, a service history and/or service schedule of the at least one metal working and/or woodworking machine, and a validity of the at least one user identifier.

4. The system of any of preceding claims, where the at least one server (160) allows an access to it through a telecommunication connection (162) by means of a user interface (170).

5. The system of any of preceding claims, which further comprising at least one portable display unit (150) that represents whether the at least one metal working and/or woodworking machine is activated and/or it is in use, where the activation information is obtained from the the central processing unit through a wireless connection (142).

6. The system of any of preceding claims, where the technical working area comprising at least one socket (130) and/or lightning (132), and the central processing unit controls the at least one socket and/or lightning.

7. A method for controlling a use of at least one metal working and/or woodworking machine (120) in a technical working area (102) by the system of any of the preceding claims, comprising following steps:
controlling, by a central processing unit (110), the at least one metal working and/or woodworking machine remotely,
identifying, by a local operation portion (126) of a metal working and/or woodworking machine (120), a user when at least one portable user identifier (128) is read,
activating, by the the local operation portion, the at least one metal working and/or woodworking machine after identifying a user, if the local operation portion recognizes that the user has right to use the at least one metal working and/or woodworking machine, so that the user can turn the at least one metal working and/or woodworking machine on after the activation,
deactivating, by the the local operation portion, the at least one metal working and/or woodworking machine after identifying a user, when the user has turned the at least one metal working and/or woodworking machine off and the local operation portion recognizes the user, so that the use of the at least one metal working and/or woodworking machine is prevented after the deactivation, and
arranging, by the central processing unit, information to at least one server (160) through a telecommunication connection (162) for managing the use of the at least one metal working and/or woodworking machine, and a use of the at least one user identifier.

## Patentansprüche

1. System (100) zum Steuern einer Verwendung von mindestens einer Metallbearbeitungs- und/oder Holzbearbeitungsmaschine (120) in einem technischen Arbeitsbereich (102), umfassend
eine Zentraleinheit (110), die konfiguriert ist, um die mindestens eine Metallbearbeitungs- und/oder Holzbearbeitungsmaschine fernzusteuern,
die mindestens eine Metallbearbeitungs- und/oder Holzbearbeitungsmaschine,
einen lokalen Betriebsabschnitt (126) für jede Metallbearbeitungs- und/oder Holzbearbeitungsmaschine (120) und
mindestens eine tragbare Benutzerkennung (128), die konfiguriert ist, um einen Benutzer zu identifizieren, wenn sie vom lokalen Operationsteil gelesen wird,
wobei das System ferner mindestens einen Server umfasst, zu dem die Zentraleinheit Informationen über eine Telekommunikationsverbindung zum Verwalten der Verwendung der mindestens einen Metallbearbeitungs- und/oder Holzbearbeitungsmaschine und einer Verwendung der mindestens einen Benutzerkennung anordnet
und **dadurch gekennzeichnet, dass**:
der lokale Betriebsabschnitt konfiguriert ist, um die mindestens eine Metallbearbeitungs- und/oder Holzbearbeitungsmaschine nach dem Identifizieren eines Benutzers zu aktivieren, wenn er erkennt, dass der Benutzer das Recht hat, die mindestens eine Metallbearbeitungs- und/oder Holzbearbeitungsmaschine zu verwenden, so dass der Benutzer die mindestens eine Metallbearbeitungs- und/oder Holzbearbeitungsmaschine nach der Aktivierung einschalten kann, und
der lokale Betriebsabschnitt konfiguriert ist, um die mindestens eine Metallbearbeitungs- und/oder Holzbearbeitungsmaschine nach dem Identifizieren eines Benutzers zu deaktivieren, wenn der Benutzer die mindestens eine Metallbearbeitungs- und/oder Holzbearbeitungsmaschine ausgeschaltet hater und er den Benutzer erkennt, so dass die Verwendung der mindestens einen Metallbearbeitungs- und/oder Holzbearbeitungsmaschine nach der Deaktivierung verhindert wird.

2. System des vorhergehenden Anspruchs, wobei die Zentraleinheit mindestens eines der Folgenden bereitstellt: seine Steuerungssoftware mittels Aktualisierungsinformationen zu aktualisieren, die von mindestens einem Server gesendet werden, ein Protokoll der mindestens einen Metallbearbeitungs- und/oder Holzbearbeitungsmaschine zu verwalten, Informationen zum Stromverbrauch und/oder zur Betriebszeit der mindestens einen Metallbearbeitungs- und/oder Holzbearbeitungsmaschine zu erhalten, die Notwendigkeit einer Wartung zu überwachen, den mindestens einen Server über die Notwendigkeit einer Wartung zu informieren, und die Rechte der mindestens einen Benutzerkennung zu verwalten.

3. System nach einem der vorhergehenden Ansprüche, wobei der mindestens eine Server mindestens eine der folgenden Informationen darstellt und/oder ändert: Protokolldaten, Stromverbrauch, Betriebszeit, Wartungsverlauf und/oder Wartungsplan der mindestens einen Metallbearbeitungs- und/oder Holzbearbeitungsmaschine und eine Gültigkeit der mindestens einen Benutzerkennung.

4. System nach einem der vorhergehenden Ansprüche, wobei der mindestens eine Server (160) einen Zugriff über eine Telekommunikationsverbindung (162) mittels einer Benutzerschnittstelle (170) darauf ermöglicht.

5. System nach einem der vorhergehenden Ansprüche, das ferner mindestens eine tragbare Anzeigeeinheit (150) umfasst, die darstellt, ob die mindestens eine Metallbearbeitungs- und/oder Holzbearbeitungsmaschine aktiviert ist und/oder verwendet wird, wobei die Aktivierungsinformationen von der Zentraleinheit über eine drahtlose Verbindung (142) erhalten werden.

6. System nach einem der vorhergehenden Ansprüche, wobei der technische Arbeitsbereich mindestens eine Steckdose (130) und/oder einen Beleuchtung (132) umfasst, und die Zentraleinheit die mindestens eine Steckdose und/oder einen Beleuchtung steuert.

7. Verfahren zum Steuern einer Verwendung von mindestens einer Metallbearbeitungs- und/oder Holzbearbeitungsmaschine (120) in einem technischen Arbeitsbereich (102) durch das System eines der vorhergehenden Ansprüche, umfassend folgende Schritte:
Fernsteuern der mindestens einen Metallbearbeitungs- und/oder Holzbearbeitungsmaschine durch eine Zentraleinheit (110),
Identifizieren eines Benutzers durch einen lokalen Betriebsabschnitt (126) einer Metallbearbeitungs- und/oder Holzbearbeitungsmaschine (120), wenn mindestens eine tragbare Benutzerkennung (128) gelesen wird,
Aktivieren der mindestens einen Metallbearbeitungs- und/oder Holzbearbeitungsmaschine durch den lokalen Betriebsabschnitt nach Identifizierung eines Benutzers,
wobei der lokale Betriebsabschnitt anerkennt, dass der Benutzer das Recht hat, die mindestens eine Metallbearbeitungs- und/oder Holzbearbeitungsmaschine zu verwenden, so dass der Benutzer die mindestens eine Metallbearbeitungs- und/oder Holzbearbeitungsmaschine nach der Aktivierung einschalten kann,
Deaktivieren der mindestens einen Metallbearbeitungs- und/oder Holzbearbeitungsmaschine durch den lokalen Betriebsabschnitt nach Identifizierung eines Benutzers, wenn der Benutzer mindestens eine Metallbearbeitungs- und/oder Holzbearbeitungsmaschine ausgeschaltet hat und der lokale Betriebsabschnitt den Benutzer erkennt, so dass die Verwendung der mindestens einen Metallbearbeitungs- und/oder Holzbearbeitungsmaschine nach der Deaktivierung verhindert wird, und
Anordnen von Informationen an mindestens einen Server (160) durch die Zentraleinheit über eine Telekommunikationsverbindung (162) zum Verwalten der Verwendung der mindestens einen Metallbearbeitungs- und/oder Holzbearbeitungsmaschine und einer Verwendung der mindestens einen Benutzerkennung.

## Revendications

1. Système (100) pour commander une utilisation d'au moins une machine à travailler le métal et/ou le bois (120) dans une zone de travail technique (102), comprenant
une unité centrale de traitement (110) configurée pour commander à distance l'au moins une machine à travailler le métal et/ou le bois,
l'au moins une machine à travailler le métal et/ou le bois, une partie de fonctionnement local (126) pour chaque machine à travailler le métal et/ou le bois (120), et
au moins un identifiant d'utilisateur portable (128) configuré pour identifier un utilisateur lorsqu'il est lu par la partie de fonctionnement locale,
le système comprenant en outre au moins un serveur sur lequel l'unité centrale de traitement dispose des informations à travers une connexion de télécommunication pour gérer l'utilisation de l'au moins une machine à travailler le métal et/ou le bois, et une utilisation de l'au moins un identifiant d'utilisateur et **caractérisé en ce que** :
la partie de fonctionnement local est configurée pour activer l'au moins une machine à travailler le métal et/ou le bois après avoir identifié un utilisateur, si elle reconnaît que l'utilisateur a le droit d'utiliser l'au moins une machine à travailler le métal et/ou le bois, de sorte que l'utilisateur peut actionner l'au moins une machine à travailler le métal et/ou le bois après l'activation, et
la partie de fonctionnement local est configurée pour désactiver l'au moins une machine à travailler le métal et/ou le bois après avoir identifié un utilisateur, lorsque l'utilisateur a désactivé l'au moins une machine à travailler le métal et/ou le bois et qu'elle reconnaît l'utilisateur, de sorte que l'utilisation de l'au moins une machine à travailler le métal et/ou du bois est empêchée après la désactivation.

2. Système selon la revendication précédente, dans lequel l'unité centrale de traitement fournit au moins l'une des actions suivantes : mettre à jour son logiciel de commande au moyen d'informations de mise à jour envoyées par l'au moins un serveur, gérer un journal de l'au moins une machine à travailler le métal et/ou le bois, obtenir des informations sur la consommation d'énergie et/ou le temps de fonctionnement de l'au moins une machine à travailler le métal et/ou le bois, surveiller un besoin d'entretien, informer l'au moins un serveur de la nécessité d'un entretien, et gérer les droits de l'au moins un identifiant d'utilisateur.

3. Système selon l'une quelconque des revendications précédentes, dans lequel l'au moins un serveur représente et/ou modifie au moins l'une des informations suivantes : données de journal, consommation d'énergie, temps de fonctionnement, un historique d'entretien et/ou un programme d'entretien de l'au moins une machine à travailler le métal et/ou le bois, et une validité de l'au moins un identifiant d'utilisateur.

4. Système selon l'une quelconque des revendications précédentes, dans lequel l'au moins un serveur (160) permet un accès à celui-ci à travers une connexion de télécommunication (162) au moyen d'une interface utilisateur (170).

5. Système selon l'une quelconque des revendications précédentes, comprenant en outre au moins une unité d'affichage portable (150) qui détermine si l'au moins une machine à travailler le métal et/ou le bois est activée et/ou est en cours d'utilisation, dans lequel les informations d'activation sont obtenues à partir de l'unité centrale de traitement à travers une connexion sans fil (142).

6. Système selon l'une quelconque des revendications précédentes, dans lequel la zone de travail technique comprend au moins une prise (130) et/ou un éclairage (132), et l'unité centrale de traitement commande l'au moins une prise et/ou l'éclairage.

7. Procédé pour commander une utilisation d'au moins une machine à travailler le métal et/ou le bois (120) dans une zone de travail technique (102) par le système selon l'une quelconque des revendications précédentes, comprenant les étapes suivantes :
la commande, par une unité centrale de traitement (110), de l'au moins une machine à travailler le métal et/ou le bois à distance,
l'identification, par une partie de fonctionnement local (126) d'une machine à travailler le métal et/ou le bois (120), d'un utilisateur lorsqu'au moins un identifiant d'utilisateur portable (128) est lu,
l'activation, par la partie de fonctionnement local, de l'au moins une machine à travailler le métal et/ou le bois après avoir identifié un utilisateur,
si la partie de fonctionnement local reconnaît que l'utilisateur a le droit d'utiliser l'au moins une machine à travailler le métal et/ou le bois, de sorte que l'utilisateur peut actionner l'au moins une machine à travailler le métal et/ou le bois après l'activation, la désactivation, par la partie de fonctionnement local, de l'au moins une machine à travailler le métal et/ou le bois après avoir identifié un utilisateur, lorsque l'utilisateur a désactivé l'au moins une machine à travailler le métal et/ou le bois et que la partie de fonctionnement local reconnaît l'utilisateur, de sorte que l'utilisation de l'au moins une machine à travailler le métal et/ou le bois est empêchée après la désactivation, et
la disposition, par l'unité centrale de traitement, d'informations sur au moins un serveur (160) à travers une connexion de télécommunication (162) pour gérer l'utilisation de l'au moins une machine à travailler le métal et/ou le bois, et une utilisation de l'au moins un identifiant d'utilisateur.
